# EUROPÄISCHE PATENTSCHRIFT

(11) **EP 0 788 598 B1**
(45) Veröffentlichungstag und Bekanntmachung des Hinweises auf die Patenterteilung: **01.04.1998**
(21) Anmeldenummer: 95934596.8
(22) Anmeldetag: 14.10.1995
(51) Int. Cl.: G01N 27/84, G01N 21/91, G01N 21/64

(54) **ANLAGE ZUR ÜBERPRÜFUNG EINER SUSPENSION FLUORESZENZFÄHIGEN MATERIALS**
INSTALLATION FOR CHECKING A SUSPENSION OF FLUORESCING MATERIAL
APPAREIL POUR LE CONTROLE D'UNE SUSPENSION D'UN MATERIAU SUSCEPTIBLE DE FLUORESCENCE

(30) Priorität: 30.10.1994 DE 4438510
(43) Veröffentlichungstag der Anmeldung: 13.08.1997
(73) Patentinhaber: TIEDE GMBH + CO RISSPRÜFANLAGEN, D-73457 Essingen (DE)
(72) Erfinder: ABEND, Klaus, D-73457 Essingen (DE); FERRANO, Gert, D-73434 Aalen (DE); AICH, Albert, D-73463 Westhausen (DE)
(74) Vertreter: Neidl-Stippler & Partner
(86) Internationale Anmeldenummer: DE9501419
(87) Internationale Veröffentlichungsnummer: WO9613718

(56) Entgegenhaltungen:
- EP-A- 0 427 996
- DE-A- 2 100 013
- DE-A- 4 311 543
- PATENT ABSTRACTS OF JAPAN vol. 012 no. 133 (P-693), 22.April 1988 & JP-A-62 255851 (EBARA INFILCO CO LTD;OTHERS: 01) 7 November 1987
- PATENT ABSTRACTS OF JAPAN vol. 006 no. 141 (P-131), 30.Juli 1982 & JP-A-57 061944 (TOKUSHU TORYO KK) 14 April 1982

## Beschreibung

Die Erfindung betrifft eine Anlage zur Überprüfung einer Suspension von Feststoffpartikeln in einem Prüfrohr zur Aufnahme der Suspension und zum Absetzenlassen derselben darin.

Suspensionen von Feststoffpartikeln in Flüssigkeiten werden in technischen Bereichen häufig verwendet - beispielsweise handelt es sich um Suspensionen von Bariumsulfat in Flüssigkeit als Kontrastmittel für Röntgenprüfanlagen, magnetisierbare, fluoreszenzfähige Teilchen in Flüssigkeiten für die Rißprüfung; Schmieröle, die mit der Zeit einen erhöhten Feststoffgehalt an metallischem Abrieb aufweisen, Schleifmittelsuspensionen und so fort.

Viele dieser Suspensionen werden in Anlagen im Kreis geführt - so bspw. als Schmiermittel oder auch die fluoreszenzfähige Flüssigkeit in Rißprüfanlagen. Von der Intaktheit dieser Suspensionen hängt u.a. die Aussagefähigkeit der Prüfanlage ab - wenn zu wenig feste Partikel vorliegen oder diese durch mechanische Belastung beschädigt sind, sind die mit ihnen erhaltenen Prüfungen häufig schlecht oder nicht mehr verwendbar. Es besteht auch der umgekehrte Fall, daß nämlich ein vermehrter Feststoffeintrag in eine Flüssigkeit und damit die Bildung einer ständig konzentrierter werdenden Suspension übgerprüft werden muß, damit eine Aussage über die Weiterverwendbarkeit des Mittels - bspw. eines Schmieröls - getroffen werden kann, um Beschädigungen eines Motors zu vermeiden. Andererseits ist es sowohl umweltschutz- als auch kostenhalber erwünscht, die Suspension so lange wie möglich einzusetzen, um unnötige Entsorgung vermeiden zu können.

Tatsächlich werden die meisten Motoröle und auch die meisten Rißprüfmittel prophylaktisch nach einem vorherbestimmten "Serviceintervall" ausgetauscht - obwohl dies bei vielen Anwendungen nicht nötig wäre. Andererseits kann durch vermehrte Belastung der Suspension - bspw. dem Einwirken besonders starker Scherkräfte auf die Flüssigkeit oder auch bei Arbeiten unter hoher Temperatur - eine schnellere Zersetzung oder "Verbrauch" der Suspension auftreten.

Bisher wurden derartige Suspensionen oder Aufschlämmungen bei leitfähigen Materialien häufig über Leitfähigkeitsprüfungen (bei Bremsmitteln); pH-Wert-Messungen oder aber auch durch das Absitzenlassen und visuelles Beobachten desselben in einer sog. ASTM-Birne untersucht. Dabei hatte die Leitfähigkeitsprüfung den Nachteil, daß bereits eine geringfügige Änderung des Elektrolytgehalts oder des Wassergehalts bspw. von Öl zu völlig falschen Messungen führen konnte - die ASTM-Birne hatte den gravierenden Nachteil, bisher nicht automatisch erfaßbare und daher nur subjektiv ermittelbare Werte zu liefern.

Aus der EP-A-0 427 996 ist ein Verfahren zur Bestimmung aromatischer Kohlenwasserstoffe bekannt geworden, wobei Fluoreszenzspektroskopie zur Bestimmung der Konzentration fluoreszenzfähiger, d.h. flüssiger gelöster Aromaten eingesetzt wird. Hier werden also klare Flüssigkeiten und keine Suspensionen gemessen.

Die DE-A-43 11 543 betrifft eine Vorrichtung zur Ermittlung der Konzentration einer Prüfflüssigkeit, die lediglich die Lumineszenz, d.h. das von der Prüfflüssigkeit abgegebene Licht, nicht aber, ob diese Lumineszenz sich möglicherweise mit der Zeit ändertl mißt und ermöglicht daher auch keine Aussage darüber, ob die Lumineszenz durch abgeriebenes fluoreszenzfähiges Material oder durch die Teilchen selbst, an die das fluoreszenzfähige Material gebunden ist, auftritt. Diese Druckschrift ermöglicht auch keine Messungen der Feststoffdichte der Suspension, da die Emission von Fluoreszenzlicht keine derartigen Aussagen ermöglicht.

Die JP-A-62-255851 wiederum betrifft die Messung einer Sedimentationsgeschwindigkeit eines Materials, wie sie bei Koagulationsmeßvorrichtungen beispielsweise für die Lösungsmittelkoagulation von Kunststoffen, gefordert ist. Es wird dabei also die Größenzunahme der suspendierten Teilchen mit der Zeit gemessen. Das Gebiet der Erfindung bezieht sich demgegenüber auf die Messung von fluoreszenzfähigem Material, das mit der Zeit gegebenenfalls an Größe abnimmt.

Es ist demzufolge Aufgabe der Erfindung, eine Anlage zu schaffen, die automatisch und zuverlässig sowie überprüfbar die Funktionsfähigkeit von Suspensionen von Feststoffen in Flüssigkeit überprüft.

Die Aufgabe wird erfindungsgemäß durch eine Anlage zur Überprüfung einer Suspension von Feststoffpartikeln in einem Prüfrohr zur Aufnahme der Suspension und zum Absetzen lassen derselben darin mit: einer Beleuchtungsstrahlungsquelle (L), einem für die Beleuchtungsstrahlung und die aus demselben austretenden Strahlung transparentes Prüfrohr (P), das im Strahlengang der Anlage anordenbar ist, gegebenenfalls einen weiteren für die Beleuchtungsstrahlung und die aus demselben austretenden Strahlung transparenten Prüfrohr (P_{E}), in dem eine Vergleichs- oder Eichflüssigkeit absitzen gelassen wird, das im Strahlengang der Anlage anordenbar ist, einer Sensoreinrichtung zur Erfassung der Beleuchtungsstrahlung (S_{L}), einer Sensoreinrichtung zur Erfassung von aus dem/n-Prüfrohr (en) (P_{E,}P) in Transmission austretenden Strahlung (S_{T}), eine Sensoreinrichtung zur Erfassung der aus dem/n Prüfrohr (en) austretenden Strahlung (S_{F}) unter einem anderen Winkel als 180°, einer Zeitgebereinrichtung (U) zur Veranlassung der Aufnahme von zeitlich mit Abstand gemessenen Meßwerten an derselben in das Prüfrohr eingeführten Feststoffsuspension und zur Einführung neuer Feststoffsuspensionen nach jeweils vorherbestimmten Zeitintervallen; und
- eine Rechnereinheit (R) zur Verarbeitung der erhaltenen Meßwerte und Ausgabe von mindestens einem Ausgabesignal an die Verarbeitungseinheit, aufweist, gelöst. Dabei können beliebige bekannte Beleuchtungseinrichtungen eingesetzt werden, wie LASER oder auch UV-Lampen, normale Lampen od. dgl. Als Prüfrohre kommen runde, aber auch eckige küvettenartige Gefäße in frage, die problemlose Durchstrahlung und auch zufriedenstellende Reinigung erlauben.

Bevorzugt handelt es sich um eine Anlage zur Überprüfung einer Suspension fluoreszenz- oder phosphoreszenzfähigen Materials, mit einer Anregungsstrahlungsquelle mit Strahlung im Fluoreszenz- Phosphoreszenzanregungswellenlängenbereich, einem ein für die Beleuchtungsstrahlung und die aus demselben austretende Fluoreszenz- und/oder Phosphoreszenz-Strahlung transparentes Prüfrohr (P), in dem Prüfmittel absitzen gelassen wird, das im Strahlengang der Anlage anordenbar ist, ggf. einem weiteren, für die Beleuchtungsstrahlung und die aus demselben austretende Fluoreszenz- u./oder Phosphoreszenz-Strahlung transparenten Prüfrohr (P_{E}), in dem eine Vergleichs- oder Eichflüssigkeit absitzen gelassen wird, das im Strahlengang der Anlage anordenbar ist; einer Sensoreinrichtung zur Erfassung der Beleuchtungsstrahlung (S_{L}); einer Sensoreinrichtung zur Erfassung der aus dem/n Prüfrohr(en) (P_{E},P) austretenden Strahlung in Transmission (S_{T}); einer Sensoreinrichtung zur Erfassung der aus dem/n Prüfrohr(en) austretenden Fluoreszenz- u./oder Phosphoreszenzstrahlung (SF); einer Zeitgebereinrichtung (U) die es ermöglicht, nach vorherbestimmbaren Zeiträumen Meßwerte abzunehmen und entsprechend abzuspeichern;
sowie einer Rechnereinheit (R) zur Verarbeitung der erhaltenen Meßwerte und Ausgabe von mindestens einem Ausgabesignal an die Verarbeitungseinheit.

Bevorzugt ist die erfindungsgemäße Anlage so angeordnet, daßß das Prüfrohr (P) im Bypass einer kontinuierlich Suspension umwälzenden Anlage angeschlossen ist, also eine ständige - auch automatisierbare - Überwachung des Prüfmittels und auch die Dokumentation der Überwachungswerte zur Erfüllung von Dokumentationspflichten möglich ist.

Bevorzugt weist das fluoreszenzfähige Feststoff-Material der Prüfmittelsuspension mit fluoreszenzfähigem oder phosphoreszenzfähigem Farbstoff verbundene Partikel auf.
Es kann günstig sein, wenn die Wellenlänge der Beleuchtungsquelle nur eine geringe Bandbreite aufweist, bspw. durch Vorschalten eines Band-Filters oder durch Verwendung eines Lasers - dadurch können Störeffekte aus anderen Wellenlängenbereichen sicherer ausgeschlossen werden.

Als Sensoreinrichtung zur Messung der Fluoreszenz/Phosphoreszenz (SF) eignen sich insbesondere durch Kanten- oder Bandfilter, die Wellenlängen mindestens im Bereich der Anregungswellenlängen ausschließen, geschützte Sensoren.

Üblicherweise verarbeitet die Rechnereinheit (R) die Messwerte der Transmissionsstrahlung und der aus dem Prüfrohr austretenden Strahlung unter einem Winkel von nicht 180° nach vorherbestimmbaren Zeiträumen, vergleicht die so erhaltenen Werte mit einer abgespeicherten Bewertungstabelle und produziert mindestens ein dementsprechendes Ausgangssignal. Dieses mindestens ein Ausgangssignal der Rechnereinheit (R) wird an ein Anzeigegerät (D), wie einen akustischen Signalgeber, einen Monitor, ein Zeigerinstrument od. dgl. ausgegeben.

Bevorzugt wird mindestens ein Ausgangssignal der Rechnereinheit (R) zur Steuerung einer Suspensionserneuerung; Suspensionsergänzung oder zum Abschalten der mit der Suspension arbeitenden Anlage eingesetzt.

Mindestens ein Ausgangssignal wird bevorzugt in eine Aufzeichnungseinheit zur Erstellung von permanenten Aufzeichnungen auf Speichermedien, wie Ausdrucken, Prüfdokumenten oder CD-Rom etc. geleitet, die Prüfdokumente über die Güte der fluoreszenzfähigen Suspension unter den Aufnahmebedingungen erstellen.

Bevorzugt ist dem Anzeige-Sichtgerät (20) oder einem entsprechenden Datensichtgerät mindestens ein Aufzeichnungsgerät zur permanenten Aufzeichnung des/der hergestellten Signale, wie ein Drucker od. dgl. nachgeschaltet ist.

Dadurch, daß nun erstmals eine sogar kontinuierlich arbeitsfähige und automatisierbare Anlage vorgeschlagen wird, die in regelmäßigen Abständen Informationen über die Funktionsfähigkeit der Suspension ausgibt, ist es erstmals möglich, die Funktion der Suspension bspw. in Form von Prüfdokumenten zu dokumentieren und dadurch auch Schadenersatzforderungen oder auch Anforderungen durch die ISO-Norm 9000 nachzukommen.

Obwohl die Anlage nachfolgend anhand von fluoreszenzfähigem Rißprüfmittel beschrieben wird, ist es dem Fachmann auf dem Gebiet der optischen Prüfverfahren selbstverständlich, daß die Anlage mutatis mutandis auch zur Überprüfung anderer Suspensionen eingesetzt werden kann, wobei dann ein entsprechendes Auswertungsprogramm verwendet wird. Wichtig ist vor allem die zeitliche Auswertung der Daten, da diese das Absetzverhalten und die zeitliche Änderung widerspiegeln.

Die Erfindung wird nachfolgend anhand eines Ausführungsbeispiels, nämlich einer Anlage zur Kontrolle eines fluoreszierenden Rißprüfmittels sowie der begleitenden Zeichnung detaillierter erläutert, ist aber keinesfalls auf diese beschränkt. Dabei zeigt:
- Fig. 1: ein Blockschema einer ersten Ausführungsform einer erfindungsgemäßen Anlage;
- Fig. 2: ein Blockschema einer weiteren Ausführungsform einer erfindungsgemäßen Anlage;
- Fig. 3: eine schematische Darstellung einer automatisierbaren Prüfmittelmeßeinheit; und
- Fig. 4: die Abhängigkeit von Fluoreszenz und Transmission des Prüfmittels, wie mit der in Fig. 4 dargestellten Einheit gemessen, von der Zeit.

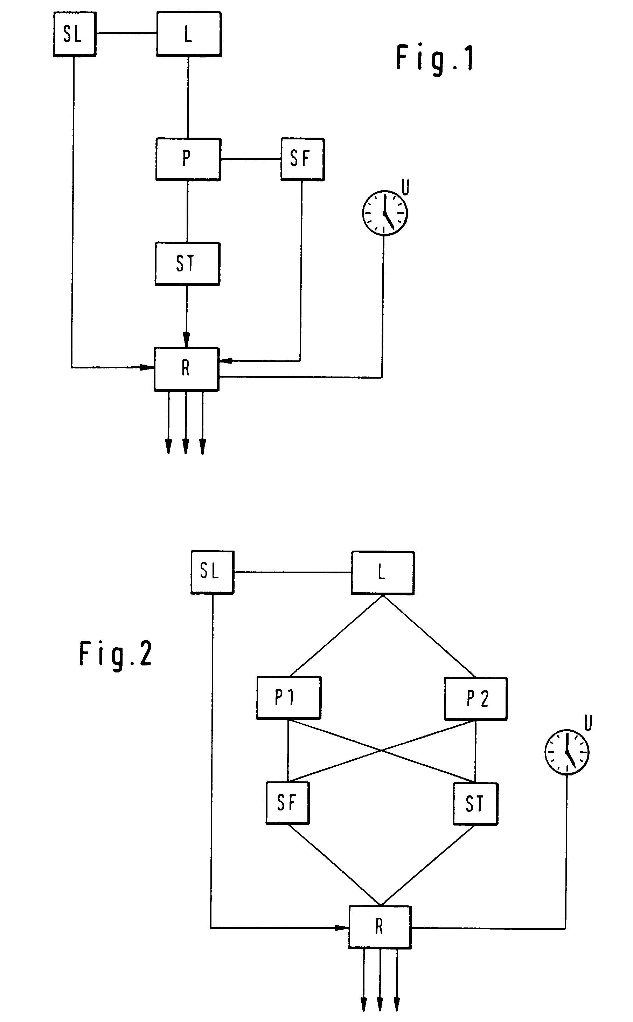

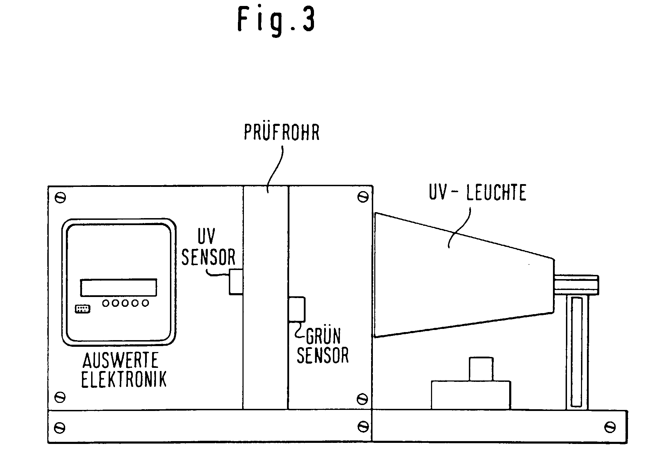

Wie in Fig. 1 und Fig. 3 gezeigt, handelt sich um Anlagen, die nun als zusätzliche Einrichtung in einem Kostenkontrollpaket und/oder Sicherheits-Dokumentation als Zusatz in einer, insbesondere automatisch arbeitenden Rißerkennungs-Prüfanlage eingesetzt werden, bei denen durch eine Lampe L als Strahlungsquelle das Prüfrohr P durchstrahlt wird und die durch dieses tretende Strahlung (ST) in Transmission, bevorzugt 180o zur Einstrahlungsrichtung, gemessen wird. Ein weiterer Sensor SF ist für nicht in Transmissionsrichtung austretende Strahlung vorgesehen, wobei dieser Sensor SF durch an sich bekannte Maßnahmen entweder nur bestimmte Wellenlängen des austretenden Lichtes mißt (durch Vorschalten von Bandfiltern) oder aber die Gesamtstrahlung.
Beide durch die Sensoren ermittelten Werte werden gemeinsam mit einem Zeitgeberwert (U) in den Rechner R geleitet, der diese sodann zu mindestens einem Ausgabesignal verarbeitet, das dann an Drucker, Anzeigeinstrumente, als Steuersignal für abhängige Anlagen etc. verwendet werden kann.

In Fig. 2 ist eine aufwendigere Anlage dargestellt, die die gleichzeitige Überprüfung eines Prüfmittels in einem Eich-Prüfrohr ermöglicht. In dieses Eich-prüfrohr kann bekannte Eichflüssigkeit - bspw. unverbrauchtes Prüfmittel - aber auch ein Weißstandard od. dgl. eingeführt werden, damit ein fester Bezug für die Messung vorhanden ist. Die Strahlungsquelle kann durch bekannte Maßnahmen (Strahlteiler etc.) dazu verwendet werden, beide Prüfrohre gleichmäßig zu beleuchten - das gleiche gilt für die Sensoren.
Bei der Ausführungsform der Fig. 2 tritt durch den internen Standard eine noch höhere Genauigkeit der Messung auf.

In Anlagen, in denen die erfindungsgemäßen Vorrichtungen bevorzugt eingesetzt werden, werden in an sich bekannter Weise Werkstücke für das Magnetpulververfahren magnetisiert, mit einem Farbstoffe, insbesondere auch Fluoreszenzfarbstoffe aufweisenden ferromagnetisches Material, wie Eisen- oder eine Eisenverbindung enthaltenden Prüfmittel unter Anreicherung der Eisenpartikel an Oberflächenfehlern besprüht, unter UV-oder sichtbarem Licht betrachtet und die so erhaltene Rißabbildung mit der Rißabbildung auf mindestens einem Kontroll-Testkörper verglichen wird.

Damit ist regelmäßige Überprüfung des im Kreislauf geführten, fluiden Markierungsmediums, das nach Abtropfen vom Prüfling regelmäßig wieder in einem Sammelbehälter gepoolt und wiederverwendet wird, auf Funktion und Alterung, Verlust an magnetisierbaren Partikeln - denn auf den Prüflingen verbleibt üblicherweise ein Partikelrest. Es kann nun die Standzeit des Mittels und die Genauigkeit des Verfahrens für die es eingesetzt wird, stark verbessert werden. Es empfiehlt sich auch eine regelmäßige Überprüfung der Bestrahlungseinrichtungen hinsichtlich ihrer Funktionsfähigkeit - es wurde gefunden, daß die UV-Lampen, die meist für die Fluoreszenzerzeugung eingesetzt wurden, sowohl hinsichtlich ihres Spektrums wegen Alterung der Lampe od. dgl. als auch wegen die Funktion der Lampe durch Verschmutzung auftretenden Beeinträchtigungen, die zu einem verfälschten Bild führen können, überwacht werden müssen - abgesehen von den Funktionen der Kostenkontrolle bzw. Gewährleistung. Dadurch, daß nun auch die Funktion der Überprüfungsanlage und deren Einzelbestandteile automatisch in vorgegebenen Intervallen erfolgen kann, sind folgende Vorteile gewahrt:
- Die Prüfmittelsuspension muß erst dann, wenn bekannt ist, daß sie erschöpft ist und keine zufriedenstellenden Meßergebnisse liefert, ausgewechselt/entsprechend ihre Nachlieferung veranlaßt werden.
- Die Lampen müssen ständig auf ihre Emission überprüft werden, dadurch kann ein Absinken der UV-Intensität im Lampenspektrum, wie sie allgemein bekannt ist, durch entsprechende Maßnahmen kompensiert werden - entweder wird die Lampe ausgewechselt , deren Betriebsspannung nachgeregelt oder auch die Empfindlichkeit der Sensoren entsprechend nachgeeicht, um so die durch veringerte Einstrahlungsintensität zustandegekommene geringere Fluoreszenz auszugleichen und die Aussage über die Fluoreszenzintensität gerätespezifisch nachzueichen.

Dadurch, daß eine automatisierte Prüfmitteleinrichtung, als "automatisierte" ASTM-Birne bezeichnet, vorgesehen ist, kann sichergestellt werden, daß Veränderungen in der Prüfmittelsuspension, die aus einer Flüssigkeit mit ferromagnetischen, darin suspendierten bevorzugt mit einem Fluoreszenzfarbstoff angefärbten Partikeln besteht, wie sie durch Abrieb oder Zerfall der ferromagnetischen Partikel bei längerem Umwälzen der Flüssigkeit, Abgabe des Farbstoffes auf den Partikeln oder auch Verlust an magnetischen Partikeln, die auf den verschiedenen gemessenen Prüfkörpern verbleiben, erkannt und entsprechend gehandelt werden kann. So kann dann entweder neue Suspension eingesetzt, ferromagnetisches Pulver in die Suspension nachgeliefert werden oder auch zumindest nachbestellt werden.

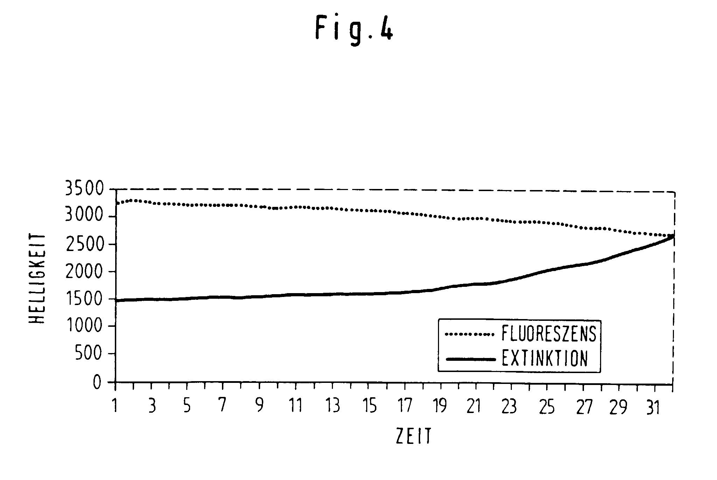

Das Prüfmittel, z. B. das fluoreszenzfähige Konzentrat gelb-grün der Anmelderin, das Zusätze enthält, unterliegt nach vorherbestimmbaren Überprüfungszeiträumen, bspw. etwa alle zwei Stunden nach Arbeitsbeginn, einer Überprüfung mit hilfe eines an sich bekannten birnenförmigen Kontrollbehälters (genannt "ASTM-Birne"), der mit einer Höhenmarkierung versehen ist und in der nach einer Absetzzeit von 60 Minuten die Höhe des Niederschlages in Teilstrichen bestimmt und danach bestimmt wird, ob die Prüfflüssigkeit noch brauchbar ist oder nicht bzw. ob der Flüssigkeit frisches Anzeigemittel (Pulver) zugegeben werden muß. Die zugehörigen Werte sind dem Fachmann auf dem Gebiet bekannt. (s.insbesondere Fig. 4). Hier kommt es also darauf an, bei einer über Tage od. dgl. sich erstreckenden kontinuierlich oder auch unterbochen laufenden Prüfanlage insbesondere durch eine kontinuierlich erfolgende und ständig verfügbare Kontrolle schnell und sicher mindestens ein Signal herzustellen, das angibt, ob mit dem noch verwendeten Prüfmittel weitergearbeitet werden darf,ggf. welche Zeit in etwa noch zur Verfügung steht, um mit ihr zu arbeiten bzw. ob neues Prüfmittel anzusetzen ist. Durch die Verarbeitung der von den Meßeinrichtungen erhaltenen Meßsignale kann sich ein erheblicher Einsparungsfaktor an Prüfmitteln ergeben.

Zur zunächst kostenmäßigen Erfassung des Materialparameters Prüfmittel wird das Prüfmittel durch Messung der optischen Dichte sowie des Fluoreszenzverhaltens - bevorzugt in regelmäßigen Zeiträumen automatisch - überprüft.

Zu diesem Zweck wird, wie aus Fig. 4 ersichtlich, Prüfmittelsuspension, die aus einem flüssigen Träger und ferromagnetischen, fluoreszenzfähigen Partikeln besteht, aus dem Prüfmittelkreislauf der Prüfanlage abgezweigt, in ein Prüfrohr oder Küvette gebracht und dort stehengelassen, sodaß sich eine ruhende, nicht turbulente Flüssigkeit zum Prüfen ergibt. Dort wird dann die Dichte dieser ruhenden Flüssigkeit in Transmission mit bekanntem Sensor und die Fluoreszenz über einen auf die Wellenlänge der Fluoreszenzstrahlung (hier im Grün-Bereich, da dort die Fluoreszenz auftritt) eingestellten Sensor gleichzeitig gemessen. Es werden zu verschiedenen Zeitpunkten ab Einführen von Prüfmittel ins Prüfrohr zeitlich verschoben Meßwerte ermittelt. In jedem Fall wird ein Anfangswert der Transmission und Fluoreszenz nach Einführen der fluiden Prüfmittelsuspension in das Prüfrohr sowie mindestens ein weiterer Wert jeweils für T und F zum Zeitpunkt T nach dem Einführen gemessen.

Bei Alterung des Prüfmittels ändert sich die Teilchengröße der Partikel aber auch deren Fluoreszenzfähigkeit. Dies führt zu Meßwerten, die in Fig. 5 schematisch dargestellt sind. Danach steigt die Extinktion wegen wachsenden Anteils an kleineren, langsam absinkenden Partikeln durch Abrieb und die Fluoreszenz sinkt, da das fluoreszenzfähige Material aufgrund der Bestrahlung einer photochemischen als auch einer allgemeinen Alterung durch die mechanische Beanspruchung desselben sowie weiteren Belastungen unterliegt.

Somit können durch die Prüfmitteltesteinheit folgende Größen mit Aussagefähigkeit gemessen werden, die dann zu einem Ausgabesignal der Prüfmitteltesteinheit führen, das die Verwendbarkeit des Prüfmittels angibt:
Schmutzeintrag im Prüfmittel - bspw. Abrieb aus Werkstücken etc. zeigt sich als sinkende Transmission und sinkende Fluoreszenz am Meßanfang (T₀); Wassereintrag zeigt sich als steigende Transmission bei (T₀) und Wasseraustrag als Höherkonzentration an Partikeln, also sinkende Transmission und steigende Fluoreszenz. Bei Verlust an Partikeln sinkt die Anfangsfluoreszenz (F₀) und bei Abrieb von Fluoreszenz-Material verbleibt nach dem Absetzen der magnetischen Partikel, die schwerer als Wasser sind, Fluoreszenz in der überstehenden Flüssigkeit erhalten - also fluoresziert die Flüssigkeit verbrauchten Prüfmittels stärker nach dem Absetzen, als bei funktionsfähigem Prüfmittel (F_{T}).

Es ist bevorzugt, daß das Prüfrohr in Art einer selbstreinigenden Durchflußküvette ausgebildet ist - also bei Beendigung der Messung neue Flüssigkeit das Prüfrohr durchströmt und so dasselbe reinigt. Es kann auch eine separate CIP-Einheit (Cleaning-in process) für Prüfrohre vorgesehen sein, um nicht durch das Prüfmittel entfernbare Verunreinigungen, wie verbrannte oder polymerisierte organische Verbindungen, die zur Verschmutzung des Prüfrohres und damit zur Verfälschung von Messungen führen können, zu lösen. Anstelle eines Anzeigen-Sichtgerätes oder digitalen Datensichtgerätes (wie Zähler od.dgl. zur Darstellung der Ausgangssignale des Rechners) können diese einemm Schreibgerät, z. B. einem Laser-Drucker oder einem Tintenstrahlschreiber zugeführt werden. Auf einem zugehörigen Aufzeichnungsmaterial, wie dem Schreibpapier werden somit im Laufe des Betriebes über Tage sowie längere oder auch kürzere Betriebszeiträume hinweg die erfaßten und zu überwachenden Werte als Dokumente ausgedruckt. Durch ein zugehöriges Zeitgerät (U) entsteht somit je Zeiteinheit ein Kontrolldokument, welches insbesondere nachträgliche Überprüfung von Werkstückpartien odgl. gestattet. Hierbei ist es möglich, die einzelnen statistischen Werte des Werkstückflusses, wie Teileart oder -numner, Stückzahl oder sonstige Bezeichnung in eine feste Wechselbeziehung mit den Daten aus einer oder mehreren Meßwerteinheiten zu bringen. Ferner dient das Prüfdokument als Auskunft über ein voreingestelltes Fehlergrößenintervall in Abhängigkeit von der Zeit und die Werkstückart.

Das Sicherheits- und Kontrolldokument gestattet auch eine sicherere Nachkontrolle von an Sichtgeräten arbeitenden Bedienungspersonen, so daß z. B. in einer Nachtschicht getroffene Beurteilungen des Markierelementes 20d in den Farbfeldern nachprüfbar und ggfs.nachkorrigierbar sind.

Die Erfassung des auf Helligkeitswerte zurückgehenden Datenflusses kann statt von einer Kamera vorteilhaft auch durch eine Diodenzelle oder andere geeignete Mittel, wie sie dem Fachmann geläufig sind, geschehen. Selbstverständlich kann die Dokumentation über Datenfernübertragung auch von der Vorrichtung entfernt erstellt und abgespeichert werden.

Obwohl die Erfindung anhand eines bevorzugten Ausführungsbeispiels erläutert wurde, sind dem Fachmann Abwandlungen, die unter den Schutzumfang der Ansprüche fallen, geläufig. Die Erfindung ist daher keineswegs auf die beschriebene Ausführungsform begrenzt.

## Patentansprüche

1. Anlage zur Überprüfung einer Suspension von Feststoffpartikeln in einem Prüfrohr zur Aufnahme der Suspension und zum Absetzenlassen derselben darin, mit
- einer Beleuchtungsstrahlungsquelle (L),
- einem für die Beleuchtungsstrahlung und die aus demselben austretende Strahlung transparentes Prüfrohr (P), das im Strahlengang der Anlage anordenbar ist,
- ggf. einem weiteren, für die Beleuchtungsstrahlung und die aus demselben austretenden Strahlung transparenten Prüfrohr (P_{E}), in dem eine Vergleichs- oder Eichflüssigkeit absitzen gelassen wird, das im Strahlengang der Anlage anordenbar ist,
- einer Sensoreinrichtung zur Erfassung der Beleuchtungsstrahlung (SL)
- einer Sensoreinrichtung zur Erfassung von aus dem/n Prüf rohr(en) (P_{E},P) in Transmission austretenden Strahlung (S_{T})
- eine Sensoreinrichtung zur Erfassung der aus dem/n Prüf rohr(en) austretenden Strahlung (S_{F}) unter einem anderen Winkel als 180°;
- einer Zeitgebereinrichtung (U) zur Veranlassung der Aufnahme von zeitlich mit Abstand gemessenen Meßwerten an derselben in das Prüfrohr eingeführten Feststoffsuspension und zur Einführung neuer Feststoffsuspension nach jeweils vorherbestimmten Zeitintervallen; und
- einer Rechnereinheit (R) zur Verarbeitung der erhaltenen Meßwerte und Ausgabe von mindestens einem Ausgabesignal.

2. Anlage nach Anspruch 1, dadurch gekennzeichnet, daß zur Überprüfung einer Suspension fluoreszenz- oder phosphoreszenzfähigen Materials
- die Strahlungsquelle Strahlung im Fluoreszenz-/ Phosphoreszenzanregungswellenlängenbereich des Feststoffes abgibt und
- das/die Prüfrohr/e für die Beleuchtungsstrahlung und die aus demselben austretende Fluoreszenz- und/oder Phosphoreszenz-Strahlung transparent ist/sind.

3. Anlage nach Anspruch 1 oder 2, dadurch gekennzeichnet, daß das Prüfrohr (P) im Bypass einer kontinuierlich Suspension umwälzenden Anlage angeschlossen ist.

4. Anlage nach einem der vorangehenden Ansprüche, dadurch gekennzeichnet, daß die Wellenlänge der Beleuchtungsquelle eine geringe Bandbreite aufweist, bspw. durch Vorschalten eines Band-Filters oder durch Verwendung eines Lasers.

5. Anlage nach einem der Ansprüche 2 bis 4, dadurch gekennzeichnet, daß als Sensoreinrichtung zur Messung der Fluoreszenz/Phosphoreszenz (SF) durch Kanten- oder Bandfilter, die Wellenlängen mindestens im Bereich der Anregungswellenlängen ausschließen, geschützte Sensoren verwendet werden.

6. Anlage nach einem der vorangehenden Ansprüche, dadurch gekennzeichnet, daß die Rechnereinheit (R) die Messwerte der Transmissions- und aus dem Prüfrohr austretenden Strahlung unter einem Winkel von nicht 180° nach vorherbestimmbaren Zeiträumen verarbeitet, die so erhaltenen Werte mit einer abgespeicherten Bewertungstabelle vergleicht und mindestens ein dementsprechendes Ausgangssignal ausgibt.

7. Anlage nach einem der vorangehenden Ansprüche, dadurch gekennzeichnet, daß mindestens ein Ausgangssignal der Rechnereinheit (R) an ein Anzeigegerät (D), wie einen akustischen Signalgeber, einen Monitor, ein Zeigerinstrument od. dgl. ausgegeben wird.

8. Anlage nach einem der vorangehenden Ansprüche, dadurch gekennzeichnet, daß mindestens ein Ausgangssignal der Rechnereinheit (R) zur Steuerung einer Suspensionserneuerung; Suspensionsergänzung oder zum Abschalten der mit der Suspension arbeitenden Anlage eingesetzt wird.

9. Anlage nach einem der vorangehenden Ansprüche, dadurch gekennzeichnet, daß mindestens ein Ausgangssignal in eine Aufzeichnungseinheit zur Erstellung von permanenten Aufzeichnungen auf Speichermedien, wie Ausdrucken, Prüfdokumenten oder CD-ROM etc. geleitet wird, die Prüfdokumente über die Güte der fluoreszenzfähigen Suspension unter den Aufnahmebedingungen erstellen.

10. Anlage nach einem der vorangehenden Ansprüche, dadurch gekennzeichnet, daß dem Anzeige-Sichtgerät (20) oder einem entsprechenden Datensichtgerät mindestens ein Aufzeichnungsgerät zur permanenten Aufzeichnung des/der hergestellten Signale, wie ein Drucker od. dgl. nachgeschaltet ist.

## Claims

1. Installation for checking a suspension of solid particles in a test tube which accommodates the suspension and allows said suspension to settle therein, having
- a source of illumination radiation (L);
- a test tube (P), which is transparent for the illumination radiation and the radiation emerging from said test tube, which test tube can be disposed in the path of rays of the installation;
- possibly an additional test tube (PE), which is transparent for the illumination radiation and the radiation emerging from said test tube, and in which test tube a comparison or calibration liquid is left to settle, which test tube can be disposed in the path of rays of the installation;
- a sensor device for detecting the illumination radiation (SL);
- a sensor device for detecting radiation (ST) emerging in transmission from the test tube(s) (PE, P);
- a sensor device for detecting the radiation (SF) emerging from the test tube(s) at an angle other than 180o;
- a timer (U) for causing the pick-up of measurement values, measured at spaced intervals of time, at the same solid suspension introduced into the test tube, and for introducing new solid suspension after respective predetermined intervals of time; and
- a computer unit (R) for processing the measurement values obtained for issuing at least one output signal.

2. Installation according to claim 1, characterised in that, for checking a suspension of fluorescent or phosphorescent material,
- the radiation source emits radiation within the fluorescence/ phosphorescent excitation wavelength range of the solid; and
- the test tube(s) for the illumination radiation and for the fluorescence and/or phosphorescence radiation emerging from said test tube is/are transparent.

3. Installation according to claim I or 2, characterised in that the test tube (P) is connected in the bypass of an installation which continuously circulates suspension.

4. Installation according to one of the preceding claims, characterised in that the wavelength of the illumination source has a small band width, for example by connecting a band filter upstream thereof or by using a laser.

5. Installation according to one of claims 2 to 4, characterised in that sensors, which are protected by cut-on filters or band filters which exclude wavelengths at least within the range of the excitation wavelengths are used as the sensor device for measuring the fluorescence/phosphorescence (SF).

6. Installation according to one of the preceding claims, characterised in that the computer unit (R) processes the measurement values of the transmission radiation and radiation emerging from the test tube at an angle other than 180o after predeterminable periods of time, compares the values thus obtained with a stored evaluation table, and it issues at least one appropriate output signal.

7. Installation according to one of the preceding claims, characterised in that at least one output signal of the computer unit (R) is issued to a display apparatus (D), such as an acoustic signal transmitter, a monitor, a pointer instrument or the like.

8. Installation according to one of the preceding claims, characterised in that at least one output signal of the computer unit (R) is used to control a renewal of the suspension or a topping-up of the suspension or to switch- off the installation operating with the suspension.

9. Installation according to one of the preceding claims, characterised in that at least one output signal is conducted into a recording unit for producing permanent recordings on storage media, such as print-outs, test documents or CD-ROMs, etc., which media produce test documents concerning the quality of the fluorescent suspension under the pick-up conditions.

10. Installation according to one of the preceding claims, characterised in that at least one recording apparatus is connected downstream of the display viewing apparatus (20) or an appropriate data viewing apparatus, such as a printer or the like, for permanently recording the signal(s) produced.

## Revendications

1. Installation pour contrôler une suspension de particules de matière solide dans un tube à essai pour recevoir la suspension et pour laisser se déposer celle-ci dans celui-ci, comportant :
- une source de rayonnement d'éclairage (L),
- un tube à essai (P) transparent pour le rayonnement d'éclairage et le rayonnement sortant de celui-ci, tube qui peut être agencé dans le trajet des rayons de l'installation,
- le cas échéant, un autre tube à essai (P_{E}) transparent pour le rayonnement d'éclairage et le rayonnement sortant de celui-ci, tube dans lequel un liquide de comparaison ou d'étalonnage est laissé se déposer, tube qui peut être agencé dans le trajet des rayons de l'installation,
- un dispositif capteur pour détecter le rayonnement d'éclairage (SL),
- un dispositif capteur pour détecter le rayonnement (S_{T}) sortant du ou des tubes à essais (P_{E},P) en transmission,
- un dispositif capteur pour détecter le rayonnement (S_{F}) sortant du ou des tubes à essai sous un angle différent de 180°,
- un dispositif d'horloge (U) pour permettre la réception de valeurs de mesure mesurées à des intervalles temporels sur la même suspension de matière solide introduite dans le tube à essai et pour introduire une nouvelle suspension de matière solide après des intervalles de temps à chaque fois prédéterminés, et
- une unité de calcul (R) pour traiter les valeurs de mesure obtenues et émettre au moins un signal de sortie.

2. Installation selon la revendication 1,
caractérisée en ce que, pour contrôler une suspension d'une matière fluorescente ou phosphorescente :
- la source de rayonnement fournit un rayonnement dans la plage de longueurs d'onde de l'excitation de la fluorescence ou de la phosphorescence de la matière solide, et
- le ou les tubes à essai sont transparents pour le rayonnement d'éclairage et le rayonnement fluorescent et/ou phosphorescent sortant de celui-ci ou de ceux-ci.

3. Installation selon la revendication 1 ou 2,
caractérisée en ce que le tube à essai (P) est raccordé en dérivation d'une installation faisant circuler de façon continue la suspension.

4. Installation selon l'une des revendications précédentes,
caractérisée en ce que la longueur d'onde de la source d'éclairage présente une faible largeur de bande, par exemple par mise en place en amont d'un filtre passe-bande ou par utilisation d'un laser.

5. Installation selon une des revendications 2 à 4,
caractérisée en ce que, comme dispositif capteur pour mesurer la fluorescence/phosphorescence (SF) par des filtres passe-bande ou des filtres à arêtes, qui excluent des longueurs d'onde au moins dans la plage des longueurs d'onde d'excitation, sont utilisés des capteurs protégés.

6. Installation selon une des revendications précédentes,
caractérisée en ce que l'unité de calcul (R) traite les valeurs de mesure du rayonnement de transmission et du rayonnement sortant du tube à essai sous un angle différent de 180° après des intervalles de temps pouvant être prédéterminés, compare les valeurs ainsi obtenues avec un tableau d'évaluation mémorisé et fournit au moins un signal de sortie correspondant.

7. Installation selon une des revendications précédentes,
caractérisée en ce qu'au moins un signal de sortie de l'unité de calcul (R) est fourni à un appareil d'affichage (D), comme un dispositif de transmission de signaux acoustique, un moniteur, un instrument à cadran ou analogue.

8. Installation selon une des revendications précédentes,
caractérisée en ce qu'au moins un signal de sortie de l'unité de calcul (R) est utilisé pour commander un renouvellement de la suspension, un recomplètement de la suspension, ou pour couper l'installation travaillant avec la suspension.

9. Installation selon une des revendications précédentes,
caractérisée en qu'au moins un signal de sortie est amené dans une unité d'enregistrement pour établir des enregistrements permanents sur des moyens de mémorisation, comme des imprimés, des documents de contrôle ou des CD-ROM etc..., qui établissent des documents de contrôle sur la qualité de la suspension susceptible de fluorescence dans les conditions de réception.

10. Installation selon une des revendications précédentes,
caractérisée en ce qu'au moins un appareil d'enregistrement pour l'enregistrement permanent du ou des signaux obtenus, comme une imprimante ou analogue, est disposé en aval de l'appareil de visualisation et d'affichage (20) ou d'un appareil de visualisation de données correspondant.
